# EUROPEAN PATENT SPECIFICATION

(11) **EP 3 568 273 B1**
(45) Date of publication and mention of the grant of the patent: **29.09.2021**
(21) Application number: 17910492.2
(22) Date of filing: 12.12.2017
(51) Int. Cl.: B28B 7/00, B28B 7/18, B28B 15/00, B28B 11/04, C04B 28/02

(54) **PLANT AND METHOD FOR PRODUCING PUMICE BLOCKS HAVING CAVITIES FILLED WITH INSULATION MATERIAL**
ANLAGE UND VERFAHREN ZUR HERSTELLUNG VON BIMSSTEINBLÖCKEN MIT HOHLRÄUMEN, DIE MIT ISOLIERMATERIAL GEFÜLLT SIND
INSTALLATION ET PROCÉDÉ DE PRODUCTION DE BLOCS DE PIERRE PONCE AYANT DES CAVITÉS REMPLIES D'UN MATÉRIAU D'ISOLATION

(30) Priority: 10.01.2017 TR 201700298; 10.01.2017 TR 201700299
(43) Date of publication of application: 20.11.2019
(73) Proprietor: Akin Mermer Tekstil Insaat Makina Enerji Sanayi Ve Ticaret Ltd. STI., Burdur (TR)
(72) Inventor: AKIN, Ercan, Burdur (TR)
(74) Representative: Sevinç, Erkan
(86) International application number: PCT/TR2017/050656
(87) International publication number: WO 2018/231177

(56) References cited:
- WO-A1-2015/150550
- DE-A1- 2 614 512
- FR-A1- 2 299 468
- FR-A1- 3 023 859

## Description

### Technical Field of the Invention

The present invention relates to a plant and a method for producing hollow bricks made of pumice, and more specifically for producing pumice blocks filled with insulation materials.

### Background of the Invention

In order to reduce total weight of buildings and to improve thermal insulation properties of the same, researches on concrete materials has become important. As a result of these researches, use of pumice building elements is often preferred in construction industry. The reasons to be preferred of pumice to use as a raw material in construction sector are: low unit volume weight, high thermal and sound insulation, high resistance to fire, high resistance to freeze-thaw effects, high resistance to climatic effect, perfect acoustic property, and high resistance to pests.

In general, pumice building elements, i.e., pumice concrete solid blocks or pumice concrete cavity blocks are classified as lightweight concrete which is manufactured from the natural pumice which is very light, porous and water-absorbent when compared with normal-weight concrete. Known manufacturing method of pumice blocks in the art comprises the steps of - mixing of pumice aggregate, cement, and water, - casting obtained fresh pumice mortar into molds, - curing the molded blocks, - stacking and packaging the manufactured pumice blocks, and finally - submitting the product to end user to be used in construction sector.

JP 2002293606 A discloses a manufacturing process to provide a lightweight solid formed member. Said manufacturing process comprises mixing pumice, sawdust, a water-soluble adhesive, water and gypsum together to obtain a mixture, and filling a forming mold with said mixture and thereafter, drying and hardening the mixture, to form it into a formed member having a prescribed shape.

GB 368041 A relates to cement composition blocks containing pumice as an ingredient, and also to a method for manufacturing the same. Said manufacturing method comprises the steps of crushing commercial pumice, then washing and grading the crushed material, separating the crushed pumice from dross, mixing the eliminated pumice with cement and sufficient water, molding the final product to form the blocks as required. Said document also discloses a suitable plant for treating the crushed pumice, comprising a hopper, screen, crushing rolls, elevator, rotary washing, grading screen and jigging machine.

When the present construction industry is investigated, it is apparent that there is a need for a developed technology about manufacturing method of pumice blocks filled with insulation material and also a production plant for manufacturing the same that minimizes heat loss in buildings, provides recycling of marble residues, eliminates the cost of thermal sheathing, reduces construction costs, removes chemical damage, and provides fire resistance.

### Objects of the Invention

Primary object of the present invention is to overcome the abovementioned shortcomings of the prior art.

Another object of the present invention is to provide a method for obtaining a pumice block having high thermal and sound insulating capacity.

Another object of the present invention is to provide a method for obtaining a pumice block filled with and/or made of environment friendly materials, preferably provided by recycling marble residues.

Another object of the present invention is to provide a production plant for manufacturing pumice blocks filled with insulation material according to disclosed invention.

WO 2015/150550 A1 discloses a method for producing a masonry block having the steps of providing a mineral masonry block comprising at least one cell with walls having a water absorption rate of less than 5 g/(m².s) at 10 minutes; and filling said cell with a mineral cement foam substantially not comprising any calcium aluminate cement. The document further discloses an insulating composite block comprising at least one cell having walls optionally comprising a water-repellent material, said cell being filled with a mineral foam that does not substantially comprise any calcium aluminate.

FR 3 023 859 A1 discloses a building element and a method for manufacturing the same by mixing a first cement and a second cement to obtain a third cement; adding water to the third cement to obtain a first cement slurry; adding an accelerator for setting the cement, a plasticizer or a superplasticizer to the first cement slurry to obtain a second cement slurry; preparing a fluid foam by mixing a foaming agent with water and air; mixing the second cement slurry with the fluid foam to obtain the insulating material; injecting the insulating material into at least one recess of the frame; and taking the insulating material in said at least one recess. The document aims to find new construction elements, and in particular building blocks, making it possible to improve thermal insulation, while retaining an acceptable mechanical strength and a low cost.

FR 2 299 468 A1 concerns to blocks made of concrete and consist of two polygonal-section elements joined together along part of one side. Disclosed blocks contain cavities which are either partially or completely filled with insulating material. The manufacturing process consist of moulding the blocks, allowing them to harden slightly, (partially or completely) filling up the cavities with an insulating material, leaving an extra thickness h above each cavity, hardening the blocks, removing the excess thickness from the upper surface of the block.

DE 26 14 512 A1 relates to a hollow building block having hollow spaces filled with a foamed plastic substance, for enhancement of the insulating effect and a method for producing such a block. Said document further discloses possible applications of the building block such as: waste products may be used for the filling; the cover may be made of inorganic material; the hollow space may be widened at its open end, optionally in a stepped form; filling may be effected by vibration when the block has dried and a loose plug consolidated into position by vibration.

Another object of the present invention is to provide a production plant and a method for manufacturing a pumice block where the adherence of the pumice and insulation materials are improved, at lower cost via saving workmanship and time.

A further object of present invention is to provide an additional unit (HD) of production plant for preparing insulation material to be filled into the cavity of the pumice blocks according to disclosed invention.

### Summary of the Invention

The present invention proposes a method for producing pumice block filled with insulation material comprising the sequential steps of a) mixing grinded/sieved pumice aggregate, cement and water within a mixer for obtaining pumice mortar, b) casting the obtained fresh pumice mortar into molds for obtaining blocks with at least one cavity, c) applying pressure on to the upper surface of the molded mortar, d) removing the pressed blocks from the molds, e) pouring readily prepared insulation material into at least one cavity of each block for partially filling the same up to %90 of the height of said cavity, f) curing the obtained blocks in a hardening chamber, g) again, pouring the same insulation material into the partially filled cavity for completely filling the same, h) curing the obtained blocks in a hardening chamber, i) scalping the cured blocks for bringing the same into pre-defined dimensions, j) packaging the obtained pumice blocks.

Said invention also proposes a production plant for producing pumice block filled with insulation material by using above disclosed method steps.

### Brief Description of the Figures

The figures, whose brief explanations are herewith provided, are solely intended for providing a better understanding of the present invention and are as such not intended to define the scope of protection or the context in which said scope is to be interpreted in the absence of the description.
Figure 1 shows a perspective view of the production plant for manufacturing pumice blocks filled with insulation material according to the present invention.
Figure 2 shows a perspective view of additional unit (HD) of the production plant according to an embodiment of the present invention.

### Detailed Description of the Invention

Pumice is a porous volcanic rock with amorphous structure and composed mainly of SiO₂. Also the pumice has macro and micro-size pores which are generally unconnected with and distant to each other, and consequently has low permeability and high thermal and sound insulation capacity. Due to these advantageous physical characteristics, pumice is widely used in many industries such as the construction sector and specifically, in the production of lightweight masonry bricks. For improving the insulation performance and reducing the weight of the brick/pumice blocks, the present invention proposes a production plant and a method for production of pumice blocks filled with heat insulation material. By using the disclosed new method, the invention aimed to produce pumice blocks where the adherence of the pumice and insulation material inside the cavity of the same are improved, at lower cost via saving workmanship and time.

The method of producing pumice blocks filled with insulation material comprises the sequential steps of;
a) mixing grinded/sieved pumice aggregate, cement and water within a mixer (8) for obtaining pumice mortar,
b) casting the obtained fresh pumice mortar into molds for obtaining blocks with at least one cavity,
c) applying pressure on to the upper surface of the molded mortar,
d) removing the pressed blocks from the molds,
e) pouring readily prepared insulation material into at least one cavity of each block for partially filling the same up to %90 of the height of said cavity,
f) curing the obtained blocks in a hardening chamber,
g) again, pouring the same insulation material into the partially filled cavity for completely filling the same,
h) curing the obtained blocks in a hardening chamber,
i) scalping the cured blocks for bringing the same into pre-defined dimensions,
j) packaging the obtained pumice blocks.

In addition to the ingredients (i.e., pumice aggregate, cement and water) disclosed in step a) of the above given method, one or more of pearlite, clinker, fiber and/or marble sludge may also be added into the mixer (8) for obtaining said pumice mortar.

As detailed in the above disclosed production method, the insulation material in liquid phase is poured into at least one cavity of the pumice block at the time of production and, the manufactured end product already includes the insulation material as predetermined. In other words, curing of the pumice mortar block and the insulation material poured into the cavity of said block is performed together in pre-established steps of the production method. By this way, the production time is reduced and also the adherence of the insulation material to inner face of the pumice block cavity is improved. On the other hand, in applications where the block and the insulation materials are produced separately and gathered together before submitting the end product to the user, disadvantages such as sizing the materials and need of an adhesive for engaging the insulation material into the block are encountered.

Above disclosed sequential method steps also comprise pouring readily prepared insulation material into the cavities of the blocks for partially or completely filling, i.e., steps e) and g). According to a preferred embodiment of the present invention, said insulation material is foam concrete which already has improved thermal insulation and fire protection properties and also which is easy to use, to produce and to handle. According to this embodiment, a method for producing foam concrete includes forthcoming method steps;
I. mixing marble sludge and cement in a grout mixer (26) for obtaining concrete grout,
II. combining foam agent and water together with air in a foam generator (30) for obtaining foam,
III. mixing the concrete grout obtained in step I. and the foam obtained in step II. in a foam static mixer (31) for obtaining foam concrete as an insulation material.

The foam concrete obtained in step III of above disclosed preferred embodiment is poured into at least one cavity of each block for partially filling on step e) and poured into the partially filled cavity/cavities for completely filling the same on step g) of above disclosed method for producing said pumice blocks. Also, disclosed method steps (I to III) for producing foam concrete are also processed before any of the method steps a) to e) of claim 1.

Said foam concrete is environment-friendly since it is made of recycling marble residues i.e., marble sludge, and also it is simple and easy to implement.

In addition to the ingredients (i.e., marble sludge and cement) disclosed in step I. of the above given foam concrete production method, silica sand, ash and/or pumice may also be added into the grout mixer (26) together with marble sludge and cement.

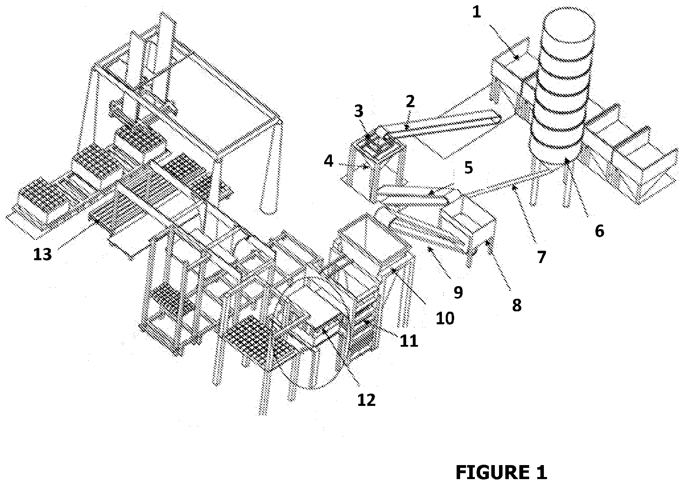

On the other hand figure 1 shows a perspective view of a mechanized, preferably computer-controlled production plant configured for manufacturing pumice blocks filled with insulation material by using above disclosed method. Said production plant mainly comprises a mixer (8) for mixing pumice aggregate with cement, water, and optionally one or more of pearlite, clinker, fiber and marble sludge; a mortar conveyor (9) for transporting obtained lightweight pumice mortar mixture to a press bunker (10); a vibrating hydraulic press (11) for molding the mixed pumice mortar and applying pressure on the upper surface of the molded mortar, to obtain pumice blocks with at least one cavity; a pre-charging collector (12) for pouring a readily prepared insulation material into cavities of the pumice blocks for partially filling the cavity, i.e., for filling up to %90 of the height of said cavity; a first hardening chamber for curing the partially filled blocks; a charging collector (35) for pouring a readily prepared insulation material into cavities of the partially filled blocks - for completely filling the same; a second hardening chamber for curing the filled blocks and scalping unit (19) for each block to be brought into a standard height.

Lightweight pumice mortar mixture obtained by mixing pumice aggregate with cement and water, and optionally with above disclosed ingredient(s) comprises undesired air bubbles. Above disclosed vibrating hydraulic press (11) of the production plant includes molds and a press unit, where the mixed pumice mortar is casted into said molds to be shaped as blocks including inner cavities and after the casting procedure is completed, pressure is applied on the upper surface of the molded mortar by said press unit both for allowing bubbles existing in the mixed pumice mortar to be removed and also for flattening the upper surface of the mortar. Additionally, the vibrating hydraulic press (11) may optionally apply vibrational motion on to the molded mortar for obtaining better results as well as the pressure unit.

According to a preferred embodiment of the present invention, said production plant further comprises a pumice bunker (1) where the obtained pumice from the pumice quarry is stored. Said stored pumice is transferred to a grinder (3) via a grinder conveyor (2) and after grinding process is completed, grinded pumice aggregate is stored in a grinder bunker (4). The grinded pumice aggregate transferred from the grinder bunker (4) via pumice aggregate conveyor (5), cement transferred via a worm conveyor (7) from a cement bunker (6), and sufficient amount of water to a mixer (8) for homogeneous mixing process. Obtained lightweight pumice mortar mixture is transported by a mortar conveyor (9) to a press bunker (10) and then poured into molds of vibrating hydraulic press (11) for obtaining blocks with cavity of a predefined shape. Then, the pressed blocks are conveyed to a pre-charging collector (12) and a readily prepared insulation material is poured into the cavities of the blocks just for partially filling the cavities. According to an embodiment, the cavities are filled with said insulation material preferably at most %90, and more preferably between 20 % - 40 % of height of each relevant cavity. The partially filled blocks are transported to a hardening chamber for curing. The cured blocks are transported under a charging collector (35) and the above mentioned insulation material is poured by said charging collector (35) into the partially filled cavities of said cured blocks to fill said cavity up to a predetermined level, preferably completely. The filled blocks are transported to a second hardening chamber for curing. The cured products are transported to a scalping unit (19) for each block to be brought into a standard height, and the manufactured pumice blocks filled with insulation material are packaged in a predefined form in a packaging unit.

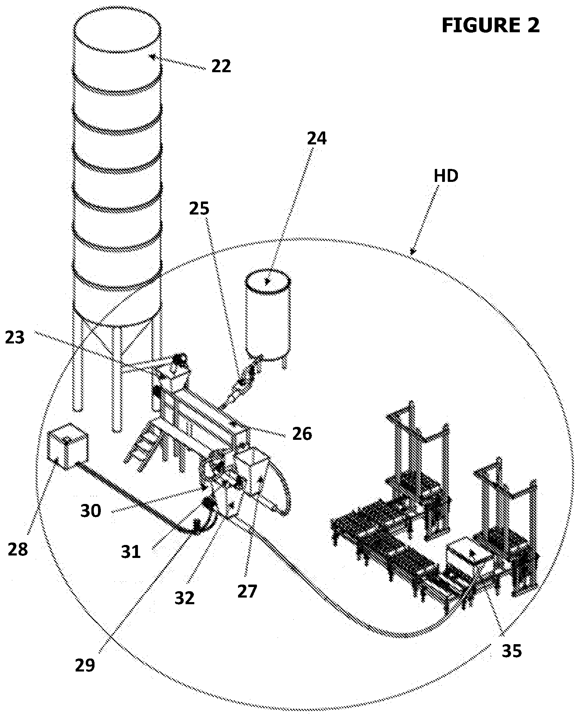

According to a preferred embodiment, above disclosed production plant also comprises an additional unit for preparing insulation material that is to be poured into the cavities of the blocks in the pre-charging collector (12) and the charging collector (35) of said plant. Said additional unit (HD) comprises bunkers for storing raw materials and at least one mixer for mixing the raw materials to produce an insulation material. According to a preferred embodiment of the present invention, said insulation material is foam concrete and said additional unit (HD) comprises a grout mixer (26) for mixing marble sludge and cement to obtain concrete grout, a foam generator (30) for combining foam agent and water together with air and for obtaining foam and a foam static mixer (31) for mixing obtained concrete grout and foam. According to another preferred embodiment of the present invention, said insulation material is foam concrete and said additional unit (HD) comprises a marble sludge bunker (24) for storing marble sludge, second cement bunker (22), a grout mixer (26) together with a second worm conveyor (23) for conveying the cement from cement bunker (22) into the grout mixer (26) and a marble sludge pump (25) for pouring the marble sludge from the marble sludge bunker (22) into the grout mixer (26) as illustrated in Figure 2. Prepared marble sludge and cement mixture is transferred into a grout bunker (27) and then to a static mixer (31). Said additional unit (HD) also comprises a foam agent tank (28) and a foam agent pump (29) for transferring the foam agent from the foam agent tank (28) into a foam generator (30). Prepared foam is transferred to said static mixer (31) and mixed together with the marble sludge and cement mixture prepared in said grout mixer (26). Obtained foam concrete is transferred to foamed concrete bunker (32) for storing the obtained foam concrete and then delivering the same to the pre-charging (12) and charging collectors (35).

According to a preferred embodiment, the method of producing pumice blocks filled with insulation material comprises an additional method step of;
k) strewing grinded pumice concrete grains on the molded pumice mortar after the step b) of above disclosed production method.

Here the grinded pumice concrete grains are obtained by grinding and granulating a pumice concrete in a pumice concrete grinding unit. By strewing said grinded pumice concrete grains on the molded pumice mortar, adhesion problem of pumice mortar to the mold surface is prevented. According to this embodiment, above disclosed production plant also comprises a pumice concrete grinding unit (not shown in the figure pages) for grinding and granulating pumice concrete, a pumice concrete bunker (not shown in the figure pages) for storing grinded pumice concrete grains and a dispenser (not shown in the figure pages) for laying out the prepared pumice concrete grains on the mixed pumice mortar immediately after it is poured into the vibrating hydraulic press (11).

## Claims

1. A method for producing pumice blocks filled with insulation material comprising the following sequential steps:
a) mixing grinded/sieved pumice aggregate, cement and water within a mixer (8) for obtaining pumice mortar,
b) casting the obtained fresh pumice mortar into molds for obtaining blocks with at least one cavity,
c) applying pressure on to the upper surface of the molded mortar,
d) removing the pressed blocks from the molds,
e) pouring readily prepared insulation material into at least one cavity of each block for partially filling the same up to %90 of the height of said cavity,
f) curing the obtained blocks in a hardening chamber,
g) pouring the same insulation material into the partially filled cavity for completely filling the same,
h) curing the obtained blocks in a hardening chamber,
i) scalping the cured blocks for bringing the same into pre-defined dimensions,
j) packaging the obtained pumice blocks.

2. A method for producing pumice blocks according to claim 1, wherein one or more of pearlite, clinker, fiber and marble sludge are added into the mixer (8) for obtaining said pumice mortar, in addition to the ingredients disclosed in step a).

3. A method for producing pumice blocks according to claim 1 or 2, wherein said insulation material is foam concrete and said method also comprises the following sequential steps, processed before any of the method steps a) to e) of claim 1.
I. mixing marble sludge and cement in a grout mixer (26) for obtaining concrete grout,
II. combining foam agent and water together with air in a foam generator (30) for obtaining foam,
III. mixing the concrete grout obtained in step I) and the foam obtained in step II) in a foam static mixer (31) for obtaining foam concrete as an insulation material.

4. A method for producing pumice blocks according to claim 3, wherein one or more of silica sand, ash and pumice is added into the grout mixer (26) for obtaining said concrete grout, in addition to the ingredients disclosed in step I. of claim 3.

5. A method for producing pumice blocks according to any one of the claims 1 to 4 comprising the step of;
k) strewing grinded pumice concrete grains on the molded pumice mortar, after the method step of b) of claim 1.

6. A method for producing pumice blocks according to claim 5, comprising a step for grinding and granulating a pumice concrete in a pumice concrete grinding unit for obtaining grinded pumice concrete grains.

7. A method for producing pumice blocks according to any of the previous claims wherein said readily prepared insulation material is poured into at least one cavity of each block, for partially filling the same, up to 20 to 40 % of height of said cavity.

8. A production plant for manufacturing pumice blocks filled with insulation material, comprising;
i. a mixer (8) for mixing pumice aggregate with cement and water,
ii. a mortar conveyor (9) for transporting obtained lightweight pumice mortar mixture to a press bunker (10),
iii. a vibrating hydraulic press (11) for molding the mixed pumice mortar and applying pressure on the same to obtain pumice blocks,
iv. a pre-charging collector (12) for pouring a readily prepared insulation material into cavities of the pumice blocks for partially filling,
v. first hardening chamber for curing the partially filled blocks,
vi. a charging collector (35) for pouring a readily prepared insulation material into cavities of the partially filled blocks, for completely filling the same,
vii. a second hardening chamber for curing the filled blocks,
viii. scalping unit (19) for each block to be brought into a standard height.

9. A production plant according to claim 8, further comprising;
ix. a pumice bunker (1) where the obtained pumice from the pumice quarry is stored,
x. a grinder (3) where the stored pumice is transferred to, via a grinder conveyor (2),
xi. a grinder bunker (4) where the grinded pumice aggregate is stored,
xii. a pumice aggregate conveyor (5) for transferring the grinded pumice aggregate from said grinder bunker (4),
xiii. a cement bunker (6) for storing cement,
xiv. a worm conveyor (7) for transferring the cement from said cement bunker (6),
xv. a packaging unit for stacking the cured blocks and a packaging the same.

10. A production plant according to claim 8 or 9 further comprising an additional unit (HD) for producing foamed concrete as an insulation material having;
xvi. a grout mixer (26) for mixing marble sludge and cement to obtain concrete grout,
xvii. a foam generator (30) for combining foam agent and water together with air and for obtaining foam,
xviii. a foam static mixer (31) for mixing obtained concrete grout and foam.

11. A production plant according to claim 10 further comprising;
xix. a marble sludge bunker (24) for storing a marble sludge,
xx. a second cement bunker (22),
xxi. a marble sludge pump (25) for pouring the marble sludge from the marble sludge bunker (24) into the grout mixer (26),
xxii. a worm conveyor (23) for conveying the cement from cement bunker (22) into the grout mixer (26),
xxiii. a grout bunker (27) for storing the obtained concrete grout,
xxiv. a foam agent tank (28),
xxv. a foam agent pump (29) for transferring the foam agent from the foam agent tank (28) into a foam generator (30),
xxvi. a foam concrete bunker (32) for storing the obtained foam concrete and delivering the same to the pre-charging (12) and charging collectors (35).

12. A production plant according to any one of claims 8 to 11, comprising:
a pumice concrete grinding unit for grinding and granulating pumice concrete,
a pumice concrete bunker for storing grinded pumice concrete grains, and
a dispenser for laying out the prepared pumice concrete grains on the mixed pumice mortar immediately after it is poured into the vibrating hydraulic press (11).

## Patentansprüche

1. Ein Verfahren zur Herstellung von Bimssteinblöcken, die mit Isoliermaterial gefüllt sind, umfassend die folgenden aufeinanderfolgenden Schritte:
a) Mischen von gemahlenem/gesiebtem Bimssteinzuschlag, Zement und Wasser in einem Mischer (8), um Bimsmörtel zu erhalten,
b) Gießen des erhaltenen Bimsfrischmörtels in Formen, um Blöcke mit wenigstens einem Hohlraum zu erhalten,
c) Ausüben von Druck auf die Oberseite des geformten Mörtels,
d) Entnehmen der gepressten Blöcke aus den Formen,
e) Gießen von fertig hergestelltem Isoliermaterial in wenigstens einen Hohlraum eines jeden Blocks, um denselben teilweise auf bis zu 90% der Höhe des Hohlraums zu füllen,
f) Aushärten der erhaltenen Blöcke in einer Härtekammer,
g) Eingießen des gleichen Isoliermaterials in den teilweise gefüllten Hohlraum, um denselben vollständig zu füllen,
h) Aushärten der erhaltenen Blöcke in einer Härtekammer,
i) Trennen der ausgehärteten Blöcke, um dieselben in vordefinierte Abmessungen zu bringen,
j) Verpacken der erhaltenen Bimssteinblöcke.

2. Ein Verfahren zur Herstellung von Bimssteinblöcken gemäß Anspruch 1, wobei eines oder mehrere von Perlit, Klinker, Faser und Marmorschlamm zusätzlich zu den in Schritt a) offengelegten Bestandteilen in den Mischer (8) gegeben werden, um den Bimsmörtel zu erhalten.

3. Ein Verfahren zur Herstellung von Bimssteinblöcken gemäß Anspruch 1 oder 2, wobei das Isoliermaterial Schaumbeton ist und das Verfahren auch die folgenden aufeinanderfolgenden Schritte umfasst, die vor einem beliebigen der Verfahrensschritte a) bis e) von Anspruch 1 ausgeführt werden:
I. Mischen von Marmorschlamm und Zement in einem Mörtelmischer (26), um Betonmörtel zu erhalten,
II. Kombinieren von Schaummittel und Wasser zusammen mit Luft in einem Schaumerzeuger (30), um Schaum zu erhalten,
III. Mischen des in Schritt I) erhaltenen Betonmörtels und des in Schritt II) erhaltenen Schaums in einem statischen Schaummischer (31), um Schaumbeton als ein Isoliermaterial zu erhalten.

4. Ein Verfahren zur Herstellung von Bimssteinblöcken gemäß Anspruch 3, wobei eines oder mehrere von Quarzsand, Asche und Bims zusätzlich zu den in Schritt I von Anspruch 3 offengelegten Bestandteilen in den Mörtelmischer (26) gegeben werden, um den Betonmörtel zu erhalten.

5. Ein Verfahren zur Herstellung von Bimssteinblöcken gemäß einem der Ansprüche 1 bis 4, umfassend den Schritt:
k) Streuen von gemahlenen Bimsbetonkörnern auf den geformten Bimsmörtel, nach dem Verfahrensschritt b) von Anspruch 1.

6. Ein Verfahren zur Herstellung von Bimssteinblöcken gemäß Anspruch 5, umfassend einen Schritt des Mahlens und Granulierens von Bimsbeton in einer Bimsbeton-Mahleinheit, um gemahlene Bimsbetonkörner zu erhalten.

7. Ein Verfahren zur Herstellung von Bimssteinblöcken gemäß einem der vorhergehenden Ansprüche, wobei das fertig hergestellte Isoliermaterial in wenigstens einen Hohlraum eines jeden Blocks gegossen wird, um diesen teilweise auf 20 bis 40% der Höhe des Hohlraums zu füllen.

8. Eine Produktionsanlage zur Herstellung von Bimssteinblöcken, die mit Isoliermaterial gefüllt sind, umfassend:
i. einen Mischer (8) zum Mischen von Bimssteinzuschlag mit Zement und Wasser,
ii. einen Mörtelförderer (9) zum Transportieren der erhaltenen Bimsleichtmörtel-Mischung zu einem Pressbunker (10),
iii. eine hydraulische Vibrationspresse (11) zum Formen des gemischten Bimsmörtels und Ausüben von Druck auf denselben, um Bimssteinblöcke zu erhalten,
iv. einen Vorbeschickungsbehälter (12) zum Eingießen eines fertig hergestellten Isoliermaterials in Hohlräume der Bimssteinblöcke, um die Bimssteinblöcke teilweise zu füllen,
v. eine erste Härtekammer zum Aushärten der teilweise gefüllten Blöcke,
vi. einen Beschickungsbehälter (35) zum Eingießen eines fertig hergestellten Isoliermaterials in Hohlräume der teilweise gefüllten Blöcke, um dieselben vollständig zu füllen,
vii. eine zweite Härtekammer zum Aushärten der gefüllten Blöcke,
viii. eine Trenneinheit (19), um jeden Block auf eine Standardhöhe zu bringen.

9. Eine Produktionsanlage gemäß Anspruch 8, außerdem umfassend:
ix. einen Bimssteinbunker (1), in dem der aus dem Bimssteinbruch erhaltene Bimsstein gelagert wird,
x. eine Mühle (3), an die der gelagerte Bimsstein über einen Mahlgutförderer (2) überführt wird,
xi. einen Mahlgutbunker (4), in dem der gemahlene Bimssteinzuschlag gelagert wird,
xii. einen Bimssteinzuschlag-Förderer (5) zum Überführen des gemahlenen Bimssteinzuschlags aus dem Mahlgutbunker (4),
xiii. einen Zementbunker (6) zur Lagerung von Zement,
xiv. einen Schneckenförderer (7) zum Überführen des Zements aus dem Zementbunker (6),
xv. eine Verpackungseinheit zum Stapeln der ausgehärteten Blöcke und Verpacken derselben.

10. Eine Produktionsanlage gemäß Anspruch 8 oder 9, außerdem umfassend eine zusätzliche Einheit (HD) zum Herstellen von Schaumbeton als ein Isoliermaterial mit:
xvi. einem Mörtelmischer (26) zum Mischen von Marmorschlamm und Zement, um Betonmörtel zu erhalten,
xvii. einem Schaumerzeuger (30) zum Kombinieren von Schaummittel und Wasser zusammen mit Luft und zum Erhalten von Schaum,
xviii. einem statischen Schaummischer (31) zum Mischen von erhaltenem Betonmörtel und Schaum.

11. Eine Produktionsanlage gemäß Anspruch 10, außerdem umfassend:
xix. einen Marmorschlammbunker (24) zum Lagern von Marmorschlamm,
xx. einen zweiten Zementbunker (22),
xxi. eine Marmorschlammpumpe (25) zum Gießen des Marmorschlamms aus dem Marmorschlammbunker (24) in den Mörtelmischer (26),
xxii. einen Schneckenförderer (23) zum Transportieren des Zements aus dem Zementbunker (22) in den Mörtelmischer (26),
xxiii. einen Mörtelbunker (27) zum Lagern des erhaltenen Betonmörtels,
xxiv. einen Schaummitteltank (28),
xxv. eine Schaummittelpumpe (29) zum Überführen des Schaummittels aus dem Schaummitteltank (28) in einen Schaumerzeuger (30),
xxvi. einen Schaumbetonbunker (32) zum Lagern des erhalten Schaumbetons und Transport desselben zu dem Vorbeschickungs- (12) und Beschickungsbehälter (35).

12. Eine Produktionsanlage gemäß einem der Ansprüche 8 bis 11, umfassend:
eine Bimsbeton-Mahleinheit zum Mahlen und Granulieren von Bimsbeton,
einen Bimsbetonbunker zum Lagern gemahlener Bimsbetonkörner, und
einen Verteiler zum Auslegen der hergestellten Bimsbetonkörner auf dem gemischten Bimsmörtel, unmittelbar nachdem dieser in die hydraulische Vibrationspresse (11) gegossen wurde.

## Revendications

1. Procédé de production de blocs de pierre ponce remplis de matériau isolant, comprenant les étapes séquentielles suivantes :
a) mélanger un agrégat de pierre ponce broyé/tamisé, du ciment et de l'eau à l'intérieur d'un mélangeur (8) pour obtenir un mortier de pierre ponce,
b) couler le mortier de pierre ponce frais obtenu dans des moules pour obtenir des blocs avec au moins une cavité,
c) appliquer une pression sur la surface supérieure du mortier moulé,
d) retirer les blocs pressés des moules,
e) verser du matériau isolant immédiatement préparé dans au moins une cavité de chaque bloc pour la remplir partiellement jusqu'à 90% de la hauteur de ladite cavité,
f) cuire les blocs obtenus dans une chambre de durcissement,
g) verser le même matériau isolant dans la cavité partiellement remplie pour la remplir entièrement,
h) cuire les blocs obtenus dans une chambre de durcissement,
i) scalper les blocs cuits pour les amener à des dimensions prédéfinies,
j) conditionner les blocs de pierre ponce obtenus.

2. Procédé de production de blocs de pierre ponce selon la revendication 1, dans lequel un ou plusieurs parmi de la perlite, du clinker, une fibre et de la boue de marbre sont ajoutés dans le mélangeur (8) pour obtenir ledit mortier de pierre ponce, en plus des ingrédients décrits à l'étape a).

3. Procédé de production de blocs de pierre ponce selon la revendication 1 ou 2, dans lequel ledit matériau isolant est du béton cellulaire et ledit procédé comprend également les étapes séquentielles suivantes, effectuées avant l'une quelconque des étapes a) à e) de la revendication 1 :
I. mélanger de la boue de marbre et du ciment dans un malaxeur à coulis (26) pour obtenir du coulis de béton,
II. combiner un agent moussant et de l'eau conjointement avec de l'air dans un générateur de mousse (30) pour obtenir de la mousse,
III. mélanger le coulis de béton obtenu à l'étape I) et la mousse obtenue à l'étape II) dans un mélangeur statique de mousse (31) pour obtenir du béton cellulaire comme matériau isolant.

4. Procédé de production de blocs de pierre ponce selon la revendication 3, dans lequel un ou plusieurs parmi du sable de silice, des cendres et de la pierre ponce sont ajoutés dans le malaxeur à coulis (26) pour obtenir ledit coulis de béton, en plus des ingrédients décrits à l'étape I. de la revendication 3.

5. Procédé de production de blocs de pierre ponce selon l'une quelconque des revendications 1 à 4, comprenant l'étape :
k) répandre des grains de béton de pierre ponce broyé sur le mortier de pierre ponce moulé, après l'étape b) du procédé de la revendication 1.

6. Procédé de production de blocs de pierre ponce selon la revendication 5, comprenant une étape consistant à broyer et granuler un béton de pierre ponce dans une unité de broyage de béton de pierre ponce pour obtenir des grains de béton de pierre ponce broyé.

7. Procédé de production de blocs de pierre ponce selon l'une quelconque des revendications précédentes, dans lequel ledit matériau isolant immédiatement préparé est versé dans au moins une cavité de chaque bloc, pour la remplir partiellement, jusqu'à 20 à 40% de la hauteur de ladite cavité.

8. Installation de production pour fabriquer des blocs de pierre ponce remplis de matériau isolant, comprenant :
i. un mélangeur (8) pour mélanger un agrégat de pierre ponce avec du ciment et de l'eau,
ii. un transporteur de mortier (9) pour transporter le mélange de mortier de pierre ponce léger obtenu jusqu'à une trémie de presse (10),
iii. une presse hydraulique vibrante (11) pour mouler le mortier de pierre ponce mélangé et appliquer une pression sur celui-ci pour obtenir des blocs de pierre ponce,
iv. un collecteur de préchargement (12) pour verser un matériau isolant immédiatement préparé dans des cavités des blocs de pierre ponce pour un remplissage partiel,
v. une première chambre de durcissement pour cuire les blocs partiellement remplis,
vi. un collecteur de chargement (35) pour verser un matériau isolant immédiatement préparé dans des cavités des blocs partiellement remplis, pour les remplir entièrement,
vii. une seconde chambre de durcissement pour cuire les blocs remplis,
viii. une unité de scalpage (19) pour que chaque bloc soit amené à une hauteur standard.

9. Installation de production selon la revendication 8, comprenant en outre :
ix. une trémie de pierre ponce (1) où est stockée la pierre ponce obtenue à partir de la carrière de pierre ponce,
x. un broyeur (3) vers lequel la pierre ponce stockée est transférée, par l'intermédiaire d'un transporteur de broyeur (2),
xi. une trémie de broyeur (4) où est stocké l'agrégat de pierre ponce broyé,
xii. un transporteur d'agrégat de pierre ponce (5) pour transférer l'agrégat de pierre ponce broyé depuis ladite trémie de broyeur (4),
xiii. une trémie de ciment (6) pour stocker du ciment,
xiv. un transporteur à vis sans fin (7) pour transférer le ciment depuis ladite trémie de ciment (6),
xv. une unité de conditionnement pour empiler les blocs cuits et les conditionner.

10. Installation de production selon la revendication 8 ou 9, comprenant en outre une unité supplémentaire (HD) pour produire du béton cellulaire comme matériau isolant ayant :
xvi. un malaxeur à coulis (26) pour mélanger de la boue de marbre et du ciment afin d'obtenir du coulis de béton,
xvii. un générateur de mousse (30) pour combiner un agent moussant et de l'eau conjointement avec de l'air et pour obtenir de la mousse,
xviii.un mélangeur statique de mousse (31) pour mélanger le coulis de béton et la mousse obtenus.

11. Installation de production selon la revendication 10, comprenant en outre :
xix. une trémie de boue de marbre (24) pour stocker une boue de marbre,
xx. une seconde trémie de ciment (22),
xxi. une pompe à boue de marbre (25) pour verser la boue de marbre de la trémie de boue de marbre (24) dans le malaxeur à coulis (26),
xxii. un transporteur à vis sans fin (23) pour transporter le ciment de la trémie de ciment (22) jusqu'au malaxeur à coulis (26),
xxiii.une trémie de coulis (27) pour stocker le coulis de béton obtenu,
xxiv. un réservoir d'agent moussant (28),
xxv. une pompe à agent moussant (29) pour transférer l'agent moussant du réservoir d'agent moussant (28) jusqu'à un générateur de mousse (30) xxvi. une trémie de béton cellulaire (32) pour stocker le béton cellulaire obtenu et le distribuer aux collecteurs de préchargement (12) et de chargement (35).

12. Installation de production selon l'une quelconque des revendications 8 à 11, comprenant :
une unité de broyage de béton de pierre ponce pour broyer et granuler du béton de pierre ponce,
une trémie de béton de pierre ponce pour stocker des grains de béton de pierre ponce broyé, et
un distributeur pour disposer les grains de béton de pierre ponce préparés sur le mortier de pierre ponce mélangé immédiatement après qu'il a été versé dans la presse hydraulique vibrante (11).
